# EUROPEAN PATENT APPLICATION

(11) **EP 4 050 551 A1**
(43) Date of publication of application: **31.08.2022**
(21) Application number: 20879585.6
(22) Date of filing: 18.09.2020
(51) Int. Cl.: G06Q 50/02

(54) **WORK-RELATED INFORMATION MANAGEMENT DEVICE AND WORK-RELATED INFORMATION MANAGEMENT SYSTEM**

(30) Priority: 25.10.2019 JP 2019194605
(71) Applicant: Yanmar Power Technology Co., Ltd., Osaka-shi Osaka 530-0013 (JP)
(72) Inventor: KOJIMA Yusuke, Osaka-shi, Osaka 530-0014 (JP)
(74) Representative: Novagraaf International SA
(86) International application number: PCT/JP2020/035420
(87) International publication number: WO 2021/079667

(57) **Abstract**

Afield shape identification unit 70 in a server control unit 60 identifies, on the basis of position information about a work vehicle, the shape of a work field through which the work vehicle has traveled while working. A degree-of-overlap determination unit 71 in the server control unit 60 compares the shape of the work field identified by the field shape identification unit 70 to the shape of a reference field and determines whether the degree of overlap between the work field and the reference field is greater than or equal to a prescribed degree. When the degree-of-overlap determination unit 71 determines that the degree of overlap between the work field and the reference field is equal to or greater than a prescribed degree, an information management unit 73 associates work-related information pertaining to the work in the work field with the reference field and manages the same.

## Description

### TECHNICAL FIELD

The present invention relates to a work-related information management device and a work-related information management system.

### BACKGROUND ART

Patent Literature 1 below discloses a technology for identifying a shape of a field from position information by acquiring the position information of a tractor on which a positioning device such as a Global Positioning System (GPS) is mounted while driving the tractor in the field in order to grasp the shape of the field, which is a target of a farming work.

Patent Literature 2 below discloses a technology for generating a yield map indicating distribution of a yield amount in the field by acquiring the yield amount of harvested crops and the position information of a combine harvester through harvesting of the crops in the field by the combine harvester on which the positioning device is mounted.

### CITATION LIST

### Patent Literature

Patent Literature 1: Japanese Unexamined Patent Application Publication No. 2019-133701
Patent Literature 2: Japanese Patent No. 5778108

### DISCLOSURE OF INVENTION

The shape of the field identified on the basis of the position information may have discrepancy caused by positioning errors such as individual differences in positioning devices, differences in traveling routes and the like.

On the other hand, in farming systems that have become increasingly popular in recent years, there is a growing need for technologies that promote visualization of a series of farming works from plowing to harvesting. In order to achieve the visualization of a series of farming works, the work-related information on the series of farming works from plowing to harvesting need to be properly managed for each field.

In a conventional farming system, a field in which farming works were performed is identified on the basis of position information acquired during the farming operations. Therefore, if there is a discrepancy between the shape of a field identified on the basis of the position information acquired during the farming work and the shape of a field managed by a farming system, there is a risk that work-related information on the farming work performed on the same field is treated as the work-related information on different fields. This causes nonconformity that the work-related information on the series of farming works cannot be accurately managed for each field.

Therefore, an object of the present invention is to provide a work-related information management device and a work-related information management system capable of managing work-related information as if a work by a work vehicle was performed in a reference field, even when the shape of the field identified on the basis of position information of the work vehicle traveling in the field is slightly different from the shape of the reference field.

An embodiment of the present invention provides a work-related information management device including a position information acquisition unit that acquires position information of a work vehicle traveling while working in a field, a field shape identification unit that identifies, on the basis of the position information of the work vehicle acquired by the position information acquisition unit, a shape of a work field in which the work vehicle traveled while working, a degree-of-overlap determination unit that determines whether a degree of overlap between the work field and a reference field is larger than or equal to a predetermined degree by comparing the shape of the work field identified by the field shape identification unit with the shape of the reference field, and an information management unit that, if the degree of overlap between the work field and the reference field is determined by the degree-of-overlap determination unit to be larger than or equal to the predetermined degree, manages the work-related information related to the work in the work field in association with the reference field.

This work-related information management device associates the work-related information related to the work in the work field with the reference field when the degree of overlap between the work field identified on the basis of the position information of the work vehicle acquired by the position information acquisition unit and the reference field is larger than or equal to the predetermined degree. In other words, this device is treated as if the work vehicle has performed the work in the reference field. Thus, this device can manage the work-related information as if the work by the work vehicle was performed in the reference field, even if there is a slight discrepancy between the shape of the work field and the shape of the reference field. Therefore, this work-related information management device can suppress such a situation that a work performed in the same field is managed separately as a work performed in a different field. Therefore, a user can efficiently refer to the work-related information managed in the work-related information management device.

In an embodiment of the present invention, the work-related information management device includes a work data acquisition unit that acquires work data of the work performed by a work vehicle, and a map generation unit that generates a map showing the work data at each position in the work field on the basis of the position information of the work vehicle acquired by the position information acquisition unit and the work data of the work vehicle acquired by the work data acquisition unit. Then, the information management unit manages the map generated by the map generation unit as the work-related information in association with the reference field when the degree-of-overlap determination unit determines that the degree of overlap between the work field and the reference field is larger than or equal to the predetermined degree.

This work-related information management device can manage the map generated on the basis of the work data of the work vehicle as the latest map on the reference field even when the shape of the work field and the shape of the reference field are slightly different. Therefore, this work-related information management device can suppress such a situation that a map on the work performed in the same field is managed separately as a map on the work performed in the different field. Therefore, the user can efficiently refer to the map managed in the work-related information management device.

In an embodiment of the present invention, the work vehicle is a combine harvester that harvests crops while traveling in a field, and the map generated by the map generation unit is a yield map showing a distribution situation of the yield amount in the field.

This work-related information management device can manage the yield map generated on the basis of the yield amount of crops harvested by the combine harvester as the latest yield map on the reference field, even when the shape of the work field and the shape of the reference field differ within a predetermined range. Therefore, this work-related information management device can refer to the latest yield map when spraying fertilizer to the reference field in the year following the harvest. For example, the user can use this collection map for variable fertilizer application to increase uniformity of the yield amount in the field, such as increasing the amount of fertilizer to be sprayed to areas of the field where the yield amount was low and decreasing the amount of fertilizer to be sprayed to areas of the field where the yield amount was high.

In an embodiment of the present invention, the field shape identification unit identifies the shape of the reference field on the basis of the position information of the work vehicle that traveled while working in a first time period, and identifies the shape of the work field on the basis of the position information of the work vehicle that was acquired by the position information acquisition unit in a second time period later than the first time period.

Here, in a case where a plurality of sessions of the work are performed using a single work vehicle, even if the work target is the same field, a traveling route might be slightly changed depending on the work period. Moreover, even if a user might think that the same traveling route has been traveled in the same field, an actual traveling trajectory is slightly different at each traveling in the field. If the work is performed in the same field but treated as a work in a different field due to slight differences in the traveling trajectory, management of the work-related information can become complicated in some cases.

Thus, this work-related information management device identifies the shape of the reference field on the basis of the position information when the work vehicle travels in the field in the first time period. Moreover, the work-related information management device also identifies the shape of the work field on the basis of the position information when the work vehicle travels in the field in the second time period later than the first time period. This work-related information management device can accurately manage the work-related information even when the work time period of the work for which the position information used to identify the work field was acquired is different from the work time period of the work for which the position information used to identify the reference field was acquired.

In an embodiment of the present invention, the field shape identification unit identifies the shape of the reference field on the basis of the position information of a reference work vehicle different from the work vehicle.

Even when the same field is to be worked, the traveling route may differ depending on a type of the work vehicle. For example, a traveling route on which a vehicle travels might be slightly different between a case where the work vehicle is a combine harvester and a case where the work vehicle is a tractor. Moreover, even if a user might think that a work vehicle of a different type travels on the same traveling route, an actual traveling trajectory is slightly different at each traveling in the field. If a plurality of works are performed in the same field but treated as works in different fields due to slight differences in the traveling trajectory, management of the work-related information can become complicated in some cases.

Thus, this work-related information management device has a configuration in which a shape of a work field is identified on the basis of the position information of a work vehicle, and a shape of a reference field is identified on the basis of the position information of a reference work vehicle different from the work vehicle. This work-related information management device can properly manage the work-related information even when the type of the work vehicle is different from the type of the reference work vehicle.

Another embodiment of the present invention provides a work-related information management system including the work vehicle as described above and the work-related information management device as described above. This related information management system exerts the effects described above.

### BRIEF DESCRIPTION OF DRAWINGS

FIG. 1 is a schematic diagram illustrating a configuration of a work-related information management system according to an embodiment of the present invention.
FIG. 2 is a block diagram illustrating an electrical configuration of a work vehicle included in the work-related information management system.
FIG. 3 is a block diagram illustrating the electrical configuration of a work-related information management server included in the work-related information management system.
FIG. 4 is an example of a field information management table stored in the work-related information management server.
FIG. 5 is a schematic diagram for comparing a shape of a reference field and a shape of a work field identified by a server control unit included in the work-related information management server.
FIG. 6 is a schematic diagram of a map generated by the server control unit.
FIG. 7 is an example of a work-related information management table stored in the work-related information management server.
FIG. 8 is an example of a flowchart for explaining a field determination processing by the server control unit.
FIG. 9 is an example of an image on work-related information about a management field displayed on a user terminal.

### DESCRIPTION OF EMBODIMENTS

Hereinafter, an embodiment of the present invention will be described in detail with reference to the accompanying drawings.

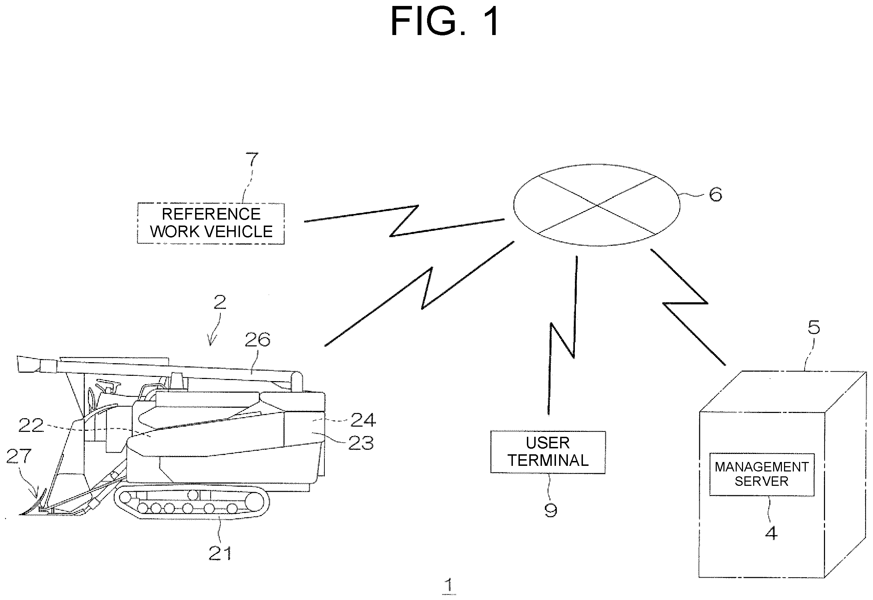

FIG. 1 is a schematic diagram illustrating a configuration of a work-related information management system 1 according to an embodiment of the present invention. The work-related information management system 1 in FIG. 1 is a system for appropriately managing information related to a work performed by a work vehicle in a field (work-related information) for each field.

The work-related information management system 1 includes a work vehicle 2 that can perform a work while traveling in a field, and a management server 4 that manages the work-related information about the work performed by the work vehicle 2 in the field for each field. Afield managed by the management server 4 is referred to as a management field. The management server 4 is an example of a work-related information management device.

The work vehicle 2 is capable of wireless communication with the management server 4 via a communication network 6. The management server 4 is disposed in a management center 5 of a management business operator that operates the management server 4. The management server 4 is operated by an operator in the management center 5. The management server 4 is capable of wireless communication not only with the work vehicle 2, but also with a user terminal 9 operated by a user (an owner of the management field, for example). The user terminal 9 is an example of an external terminal.

In this specification, the work vehicle 2 includes a work vehicle consisting of a traveling machine and a work machine towed by the traveling machine, and a work vehicle in which the traveling machine and the work machine are integrated, for example.

Work vehicles in which a traveling machine and a work machine are integrated include, for example, a rice transplanter and a combine harvester. The combine harvesters include ordinary combine harvesters and self-removing combine harvesters. In this embodiment, a case in which the work vehicle 2 is an ordinary combine harvester will be described as an example.

Unlike this embodiment, in a configuration in which a traveling machine tows a work machine, the traveling machine is, for example, a tractor. The work machine towed by the tractor includes, for example, a fertilizer spreader (fertilizer sprayer), a chemical spreader, a roll baler, a cultivator, a plow, a leveler, a mower, a sowing machine, a harvester, and the like.

The work vehicle 2 includes a traveling unit 21, an engine 22, a threshing device 23, a grain tank 24, a discharge auger 26, and a harvesting unit 27. The traveling unit 21 includes, for example, a pair of left and right crawler-type traveling devices. The engine 22 generates power to drive each part of the work vehicle 2. The harvesting unit 27 harvests crops grown in the field. The threshing device 23 threshes the crop harvested by the harvesting unit 27. The grain tank 24 stores the threshed grains. The discharge auger 26 conveys the threshed grains in the grain tank 24 so as to discharge them to an outside of the work vehicle 2.

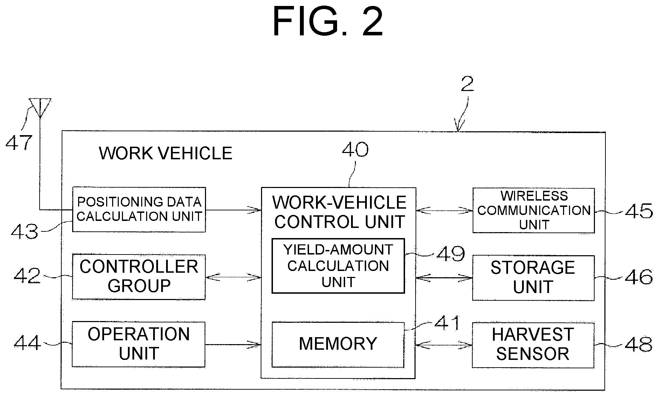

FIG. 2 is a block diagram illustrating the electrical configuration of the work vehicle 2.

The work vehicle 2 includes a control unit (hereinafter referred to as a "work-vehicle control unit 40"). The work-vehicle control unit 40 includes a microcomputer including a CPU (Central Processing Unit) and a memory 41 (volatile memory, non-volatile memory, or the like). The work-vehicle control unit 40 controls the operation of the work vehicle 2 (forward, backward, stop, turn, and other operations).

The work-vehicle control unit 40 has a plurality of controllers (controller group 42), a positioning data calculation unit 43, an operation unit 44, a wireless communication unit 45, a storage unit 46, and a harvest sensor 48 electrically connected.

The plurality of controllers are configured to control each part of the work vehicle 2. The plurality of controllers include an engine controller that controls a rotation number of the engine 22 and the like, an elevation controller that controls elevation of the harvesting unit 27, a traveling controller that controls traveling of the work vehicle 2 by individually driving a pair of crawlers of the traveling unit 21 of the work vehicle 2.

The positioning data calculation unit 43 is electrically connected to a satellite-signal receiving antenna 47 mounted on the work vehicle 2. The satellite-signal receiving antenna 47 is configured to receive a signal from a positioning satellite which constitutes a satellite positioning system. The satellite positioning system is GNSS (Global Navigation Satellite System), for example. The positioning signals received by the satellite-signal receiving antenna 47 are input into the positioning data calculation unit 43.

The positioning data calculation unit 43 calculates positioning data of the work vehicle 2 at a predetermined time interval (one second interval, for example). The positioning data includes position information (latitude and longitude information, for example) of the work vehicle 2 (strictly speaking, the satellite-signal receiving antenna 47) and time information corresponding to the position information. The work-vehicle control unit 40 acquires positioning data from the positioning data calculation unit 43. The wireless communication unit 45 is a communication interface for wireless communication with the management server 4. The storage unit 46 includes a storage device such as a non-volatile memory. The operation unit 44 is provided near a driver's seat of the work vehicle 2. The operation unit 44 is configured to accept a manual operation by an operator. The operation unit 44 includes various operation levers and switches.

The harvest sensor 48 outputs a signal for calculating a yield amount of the crop harvested by the work vehicle 2. The harvest sensor 48 includes, for example, a strain gauge, a piezoelectric element, or the like.

The grains threshed from the crops by the work vehicle 2 are fed into the grain tank 24. The harvest sensor 48 detects intensity of an impact of the grain fed into the grain tank 24 when it collides against the harvest sensor 48. The harvest sensor 48 outputs a signal on the basis of the intensity of the detected impact.

The work-vehicle control unit 40 includes a yield-amount calculation unit 49 that calculates the yield amount at a predetermined time interval (every second, for example) on the basis of the output signal from the harvest sensor 48.

The work-vehicle control unit 40 transmits time-series data to the management server 4 from the time when the engine 22 is started until the engine 22 is stopped. The time-series data includes position information, time information, machine number, model, crop type, and work data. The machine number is, for example, a number that is set for each unit of the work vehicles 2. The position information included in the time-series data is the position information of the work vehicle 2 acquired at predetermined time intervals.

In this embodiment, since the work vehicle 2 is a combine harvester, the work data includes the yield amount for each predetermined time. Unlike this embodiment, when the work vehicle 2 is a rice transplanter capable of performing a fertilizer applying work simultaneously with a rice planting work, the time-series data includes, as work data, an amount of fertilizer applied at each predetermined time. Unlike this embodiment, when the work vehicle 2 is a tractor to which a cultivator is coupled as the work machine, the time-series data includes, as the work data, a rotation number of the cultivator and the like at each predetermined time.

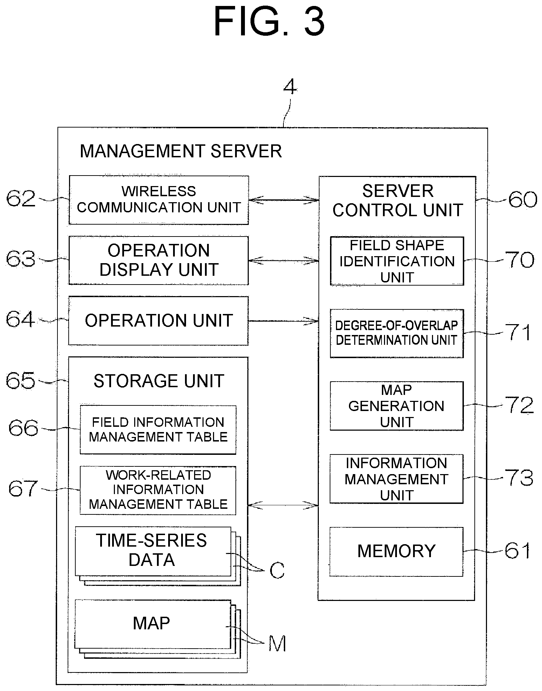

FIG. 3 is a block diagram illustrating the electrical configuration of the management server 4.

The management server 4 includes a control unit that controls the management server 4 (hereinafter, referred to as a "server control unit 60"). The server control unit 60 includes a microcomputer with a CPU and memory (volatile memory, non-volatile memory and the like) 61. The server control unit 60 is electrically connected to a wireless communication unit 62, an operation display unit 63, an operation unit 64, and a storage unit 65.

The wireless communication unit 62 is a communication interface for the server control unit 60 to communicate wirelessly with the work vehicle 2. The operation display unit 63 includes, for example, a touch panel display. The operation unit 64 includes, for example, a keyboard, a mouse, and the like. The storage unit 65 includes storage devices such as a hard disk, a non-volatile memory and the like.

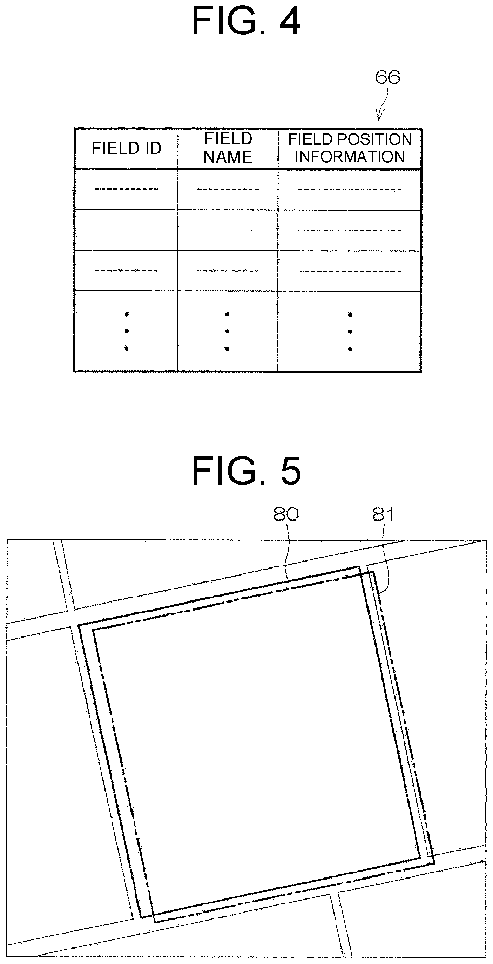

Afield information management table 66 is stored in the storage unit 65. FIG. 4 is an example of the field information management table 66. As shown in FIG. 4, the field information management table 66 stores a field ID of the management field, a field name, and field position information in association with each other. The field ID indicates an identifier of the management field. The field ID is, for example, a pre-set number for each management field. The field name indicates a name of the corresponding management field. The field position information indicates position information for identifying a position and a shape of the corresponding management field.

The server control unit 60 receives the time-series data C transmitted from the work vehicle 2 via the wireless communication unit 62. The server control unit 60 is an example of a position information acquisition unit that acquires the position information of the work vehicle 2. The server control unit 60 is also an example of a work data acquisition unit that acquires the work data of the work performed by the work vehicle 2. The server control unit 60 stores the received time-series data C in the storage unit 65 and also in the memory 61.

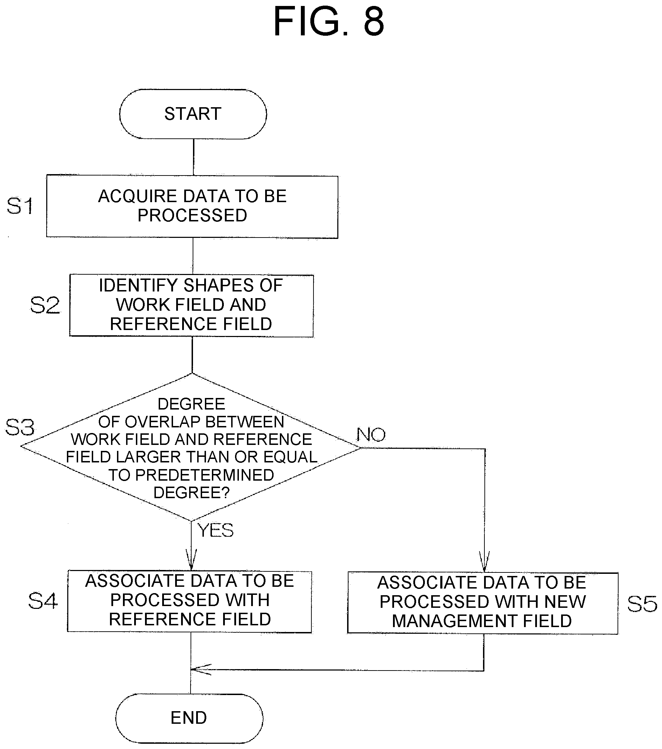

The server control unit 60 uses the time-series data C stored in the memory 61 as data to be processed and executes work-related information management processing (see FIG. 8, which will be described later). Specifically, the server control unit 60 identifies the management field corresponding to the data to be processed and generates a map M on the basis of the data to be processed. The server control unit 60 then manages the data to be processed and the map M in association with the management field. The server control unit 60 then deletes the time-series data C from the memory 61.

The server control unit 60 includes a field shape identification unit 70, a degree-of-overlap determination unit 71, a map generation unit 72, and an information management unit 73 in association with the work-related information management processing.

The field shape identification unit 70 identifies the shape of the field where the work vehicle 2 has performed a work (work field) on the basis of the position information of the work vehicle 2 contained in the data to be processed. Then, the field shape identification unit 70 identifies the shape of the management field that is closest to the work field as the reference field. For example, the management field whose center of gravity is closest to the center of gravity of the work field is selected as the reference field.

The field position information of the reference field indicates the position information of the work vehicle 2 contained in the time-series data C acquired before the data to be processed. For example, the field position information of the reference field is the position information of the work vehicle 2 when the work vehicle 2 performed the harvesting work in the first time period (last year, for example). The position information of the work vehicle 2 contained in the data to be processed is, for example, the position information of the work vehicle 2 when the work vehicle 2 performed the harvesting work in the second time period (current year, for example). In this case, the shape of the reference field is identified on the basis of the position information of the work vehicle 2 that traveled while harvesting the crop in the first time period, and the shape of the work field is identified on the basis of the position information of the work vehicle 2 that traveled while harvesting the crop in the second time period, which is later than the first time period.

FIG. 5 is a schematic diagram for comparing the shape of the reference field and the shape of the work field identified by the field shape identification unit 70.

The field shape identification unit 70 identifies the shape of the reference field and the shape of the working field, for example, by forming polygons. For example, the field shape identification unit 70 generates a polygon 80 (polygon) indicated by a solid line in FIG. 5 on the basis of the field position information of the reference field. Then, the field shape identification unit 70 generates a polygon 81 (polygon) indicated by a two-dot chain line in FIG. 5 on the basis of hourly position information of the work vehicle 2 contained in the data to be processed.

The polygon is, for example, a convex hull. The convex hull is the smallest convex polygon that encompasses all the given points. The polygon 81 of the work field is, for example, the smallest convex polygon that encompasses all the position information of the work vehicle 2 contained in the data to be processed. The polygon 80 of the reference field is, for example, the smallest convex polygon that encompasses all the field position information of the reference field.

The degree-of-overlap determination unit 71 compares the shape of the work field identified by the field shape identification unit 70 with the shape of the reference field and determines whether or not the degree of overlap between the work field and the reference field is larger than or equal to a predetermined degree.

Specifically, the determination of whether or not the degree of overlap between the work field and the reference field is larger than or equal to a predetermined degree is made on the basis of whether or not an area of a part of the polygon 81 of the work field that overlaps the polygon 80 of the reference field is larger than or equal to the predetermined percentage of the total area of the polygon 81 of the work field. The predetermined percentage is, for example, 90%.

The map generation unit 72 generates the map M on the basis of the position information of the work vehicle 2 contained in the data to be processed and the work data corresponding to the position information. When the work vehicle 2 is a combine harvester, as in this embodiment, the map M is a yield map. The yield map is a map that shows a distribution situation of the yield amount in the field.

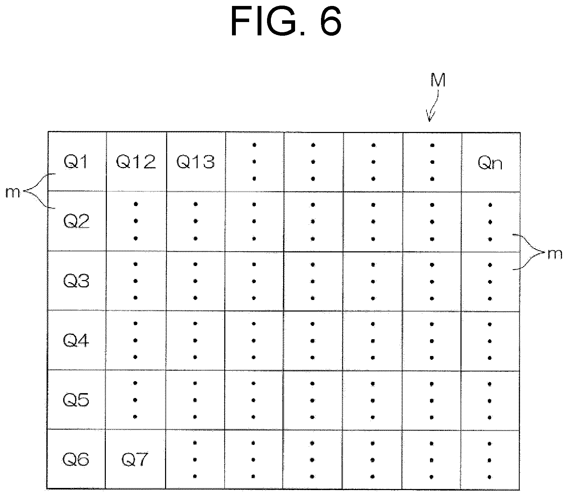

In the map M, the field is divided into a plurality of meshes m, for example, as shown in FIG. 6. The work data (yield amount) is assigned to each mesh m. To each mesh m, a value for the total yield amount measured when the work vehicle 2 is present at a position within that mesh m is assigned.

In FIG. 6, each of the meshes m is numbered. The value of the total yield amount in the i-th mesh m is indicated by a sign "Qi". When n pieces of the meshes m are assigned to a field, i is a natural number smaller than or equal to n (1 ≤ i ≤ n).

The server control unit 60 stores the map M generated by the map generation unit 72 in the storage unit 65.

The server control unit 60 may store in the storage unit 65 a fertilizer application map that can be generated on the basis of the yield map. The fertilizer application map is a map that shows the amount of fertilizer which should be applied at each position in the field in the year following the harvest. The fertilizer application map is generated in such a way that the amount of fertilizer to be sprayed is increased in areas of the field where the yield amount was low, and the amount of fertilizer to be sprayed is decreased in areas of the field where the yield amount was high.

Unlike this embodiment, when the work vehicle 2 is a rice transplanter capable of performing a fertilizer application work along with a planting work, the map M is a sprayed fertilizer map. The sprayed fertilizer map is a map showing the amount of fertilizer that was actually sprayed at each position in the field.

Unlike this embodiment, when the work vehicle 2 is a tractor to which a cultivator is coupled as a work machine, the map M is a tilling map. The tilling map is a map that shows a rotation number of the cultivator at each position in the field.

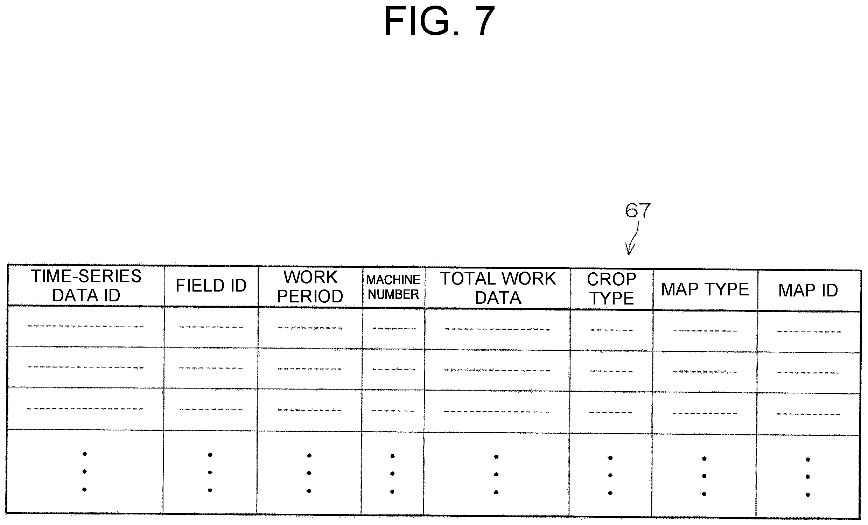

In addition to the field information management table 66, a work-related information management table 67 is stored in the storage unit 65. FIG. 7 is an example of the work-related information management table 67. In the work-related information management table 67, a time-series data ID, a field ID, a work period, a machine number, total work data, a crop type, a map type, a map ID and the like are stored in association as work-related information.

The time-series data ID is an identifier (a number, for example) that is set for the time-series data C stored in the storage unit 65. A different time-series data ID is set to each time-series data C.

The work period indicates a period from the earliest time to the latest time of the time information contained in the corresponding time-series data C. The total work data indicates the sum of the work data contained in the corresponding time-series data C. In this embodiment, the work data is the yield amount, so the total work data indicates the total yield amount. The map ID is an identifier (a number, for example) that is set for each map M generated by the map generation unit 72. The map type indicates a type of the map M. The types of the maps M include, for example, yield maps, sprayed fertilizer maps, and tilling maps.

The information management unit 73 manages the work data (indicating the yield amount, for example) and the map M in association with the management field on the basis of the determination results by the degree-of-overlap determination unit 71. The information management unit 73 adds the time-series data ID, the field ID, the work period, the machine number, the total yield amount, the crop type and the like on the basis of the data to be processed to the work-related information management table 67 on the basis of the determination results by the degree-of-overlap determination unit 71.

The field ID to be added to the work-related information management table 67 depends on the determination result by the degree-of-overlap determination unit 71. In detail, the information management unit 73 stores the field ID of the reference field in a field ID column corresponding to the data to be processed when the degree of overlap between the work field and the reference field is determined by the degree-of-overlap determination unit 71 to be larger than or equal to the predetermined degree. As a result, the work data stored in the data to be processed is associated with the reference field as work-related information.

The information management unit 73 adds the position information of the work field as a new management field to the field information management table 66 when the degree of overlap between the work field and the reference field is determined by the degree-of-overlap determination unit 71 to be smaller than the predetermined degree. At this time, the information management unit 73 sets a new field ID for the new management field. Then, the information management unit 73 stores the field ID of the new management field in the field ID column corresponding to the data to be processed. As a result, the work data stored in the data to be processed is associated with the new reference field as work-related information.

When the map generation unit 72 generates the map M on the basis of the data to be processed, the information management unit 73 adds the map ID and the map type of the generated map M to the map ID and map type columns corresponding to the data to be processed, respectively. As a result, the map M generated on the basis of the data to be processed is associated with the reference field or the new management field as work-related information.

In detail, when the degree-of-overlap determination unit 71 determines that the degree of overlap between the work field and the reference field is larger than or equal to the predetermined degree, the information management unit 73 associates the map M with the reference field and stores it in the field information management table 66. When the degree-of-overlap determination unit 71 determines that the degree of overlap between the work field and the reference field is smaller than the predetermined degree, the information management unit 73 associates the map M with the new management field and stores it in the field information management table 66.

Next, the work-related information management processing executed by the server control unit 60 will be described in detail. FIG. 8 is a flowchart for explaining the work-related information management processing executed by the server control unit 60.

In the work-related information management processing, the server control unit 60 first acquires the data to be processed (Step S1). For example, when the server control unit 60 stores the time-series data C received from the work vehicle 2 in a predetermined area of the memory 61, the time-series data C is determined as the data to be processed. Then, the field shape identification unit 70 of the server control unit 60 identifies the shape of the work field and the shape of the reference field (Step S2). Then, the degree-of-overlap determination unit 71 of the server control unit 60 determines whether or not the degree of overlap between the shape of the work field and the shape of the reference field is larger than or equal to the predetermined degree (Step S3).

When the degree of overlap between the work field and the reference field is determined by the degree-of-overlap determination unit 71 to be larger than or equal to a predetermined degree (Step S3: YES), the information management unit 73 of the server control unit 60 associates the data to be processed with the reference field (Step S4). Specifically, as described above, when the information management unit 73 adds the information contained in the data to be processed to the work-related information management table 67, it adds the field ID of the reference field to the field ID column. After Step S4, the server control unit 60 ends the work-related information management processing.

When the degree of overlap between the work field and the reference field is determined by the degree-of-overlap determination unit 71 to be smaller than the predetermined degree (Step S3: NO), the information management unit 73 of the server control unit 60 associates the data to be processed with a new management field different from the reference field (Step S5). Specifically, as described above, when the information management unit 73 adds the information contained in the data to be processed to the work-related information management table 67, it adds the field ID of the new management field in the field ID column. After Step S5, the server control unit 60 ends the work-related information management processing.

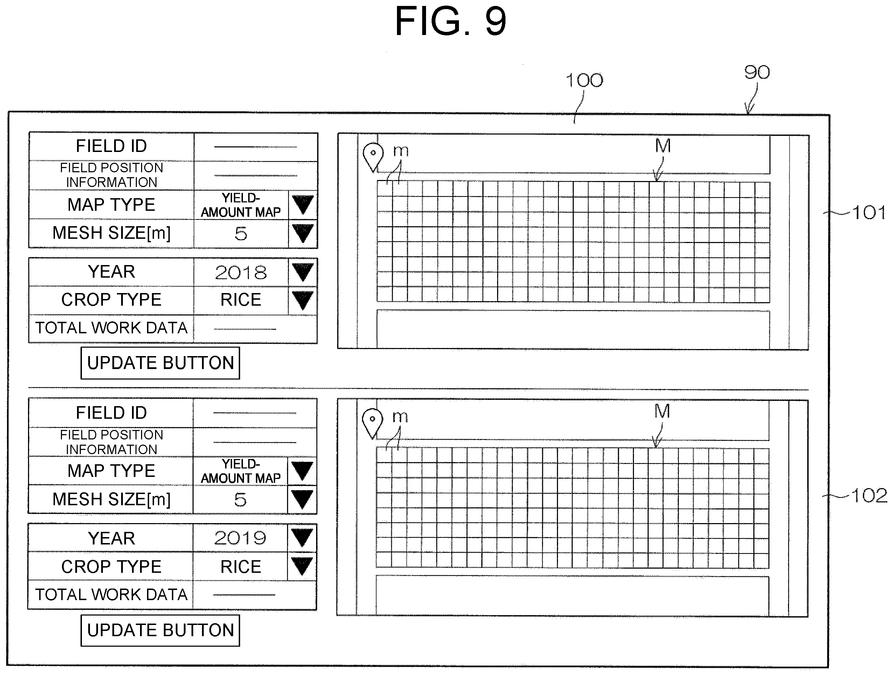

A user (an owner of a management field, for example) can use the user terminal 9 to acquire the work-related information about the work performed on the management field owned by the user from the management server 4. FIG. 9 is an example of a work-related information comparison image 100 displayed on the user terminal 9.

When the user operates the user terminal 9 to access the management server 4, the management server 4 transmits the work-related information comparison image 100 to the user terminal 9. The work-related information comparison image 100 is displayed on a display unit 90 such as a display of the user terminal 9.

The work-related information on the same management field is displayed on an upper area 101 above the center of the work-related information comparison image 100 and a lower area 102 below the center of the work-related information comparison image 100, respectively. In the upper area 101 and the lower area 102, the map M as well as the field ID, the field position information, the map type, a mesh size, the year, the crop type, the total work data and the like are associated and displayed, respectively. The year is calculated from the work period stored in the work-related information management table 67.

The upper area 101 and the lower area 102 display the work-related information selected on the basis of the user operation, respectively, in the work-related information stored in the work-related information management table 67. For example, when the user operates triangular tabs on the right side of the map type, year, and crop type columns, contents corresponding to a plurality of pieces of the work-related information are displayed for selection. The user can cause the desired work-related information to be displayed by selecting the map type, year, and crop type from the displayed selectable contents corresponding to the work-related information to be displayed, and then by pressing an Update button. Similarly, the user can change the mesh size to a desired size by operating the triangular tab on the right side of the mesh size column of the map M. The mesh size can be selected from, for example, 5 m, 10 m, and 20 m.

Therefore, users can easily compare the work-related information in their own management fields using the work-related information comparison image 100. In the example shown in FIG. 9, the upper area 101 displays the work-related information about the rice harvest in the year of 2018. On the other hand, the lower area 102 displays the work-related information about the rice harvest in the year of 2019. The user can compare the yield status of rice in the year of 2018 with the yield status of rice in the year of 2019 and examine the amount of fertilizer to be applied at each position in the management field when planting rice in the following year.

This work-related information management system 1 of this embodiment associates the work-related information related to the work in the work field with the reference field when the degree of overlap between the work field identified on the basis of the position information of the work vehicle 2 acquired by the server control unit 60 and the reference field is larger than or equal to a predetermined degree. In other words, the work-related information management system 1 treats the work vehicle 2 as having performed a work in the reference field. Thus, the work-related information management system 1 can manage the work-related information as if the work by the work vehicle 2 was performed in the reference field, even if there is a slight gap between the shape of the work field and the shape of the reference field. Therefore, the work-related information management system 1 can suppress such a situation that the work performed in the same field is managed separately as a work performed in a different field. Thus, the user can efficiently refer to the work-related information managed in the management server 4.

Moreover, in this embodiment, the server control unit 60 functions as a work data acquisition unit to acquire work data of the work performed by the work vehicle 2. Furthermore, the map generation unit 72 of the server control unit 60 generates the map M on the basis of the position information and the work data of the work vehicle 2 acquired by the server control unit 60. Then, the information management unit 73 of the server control unit 60 manages the map M as the work-related information in association with the reference field when the degree-of-overlap determination unit 71 determines that the degree of overlap between the work field and the reference field is larger than or equal to a predetermined degree.

Thus, the work-related information management system 1 can manage the map M generated on the basis of the work data of the work vehicle 2 as the latest map M on the reference field, even when the shape of the work field and the shape of the reference field are slightly different. Therefore, the work-related information management system 1 can suppress such a situation that the map M on a work performed in the same field is managed separately as the map M on a work performed in a different field. Thus, the user can efficiently refer to the map M managed in the management server 4.

In the work-related information management system 1 in this embodiment, the work vehicle 2 is a combine harvester, and the map M is a yield map. Thus, the work-related information management system 1 can manage the yield map generated on the basis of the yield amount of the crops harvested by the combine harvester as the latest yield map on the reference field, even when the shape of the work field and the shape of the reference field are slightly different. Therefore, by using the work-related information management system 1, the user can refer to the latest yield map when a fertilizer is to be sprayed to the relevant reference field in the year following the harvest. As an example, the user can use this yield map for variable fertilizer application to increase uniformity of the yield amount in the field, such as increasing the amount of fertilizer to be sprayed to areas of the field where the yield amount was low and decreasing the amount of fertilizer to be sprayed to areas of the field where the yield amount was high. Since the server control unit 60 generates a fertilization application map on the basis of the latest yield map, the work-related information management system 1 allows users to efficiently perform variable fertilization application.

Here, in the case where a plurality of sessions of the work are performed using a single work vehicle, even if the work target is the same field, a traveling route might be changed depending on the work period. Moreover, even if a user might think that the same traveling route has been traveled in the same field, an actual traveling trajectory is slightly different at each traveling in the field. If the work is performed in the same field but treated as a work in a different field due to slight differences in the traveling trajectory, management of the work-related information can become complicated in some cases. Specifically, for example, an administrator (an operator of the management server 4, for example) needs to operate the management server 4 to manually change the field ID in the work-related information management table 67. Alternatively, instead of the operator of the management server 4, a user (an owner of the management field, for example) needs to manually change the field ID in the work-related information management table 67 by using the user terminal 9.

The work-related information management system 1 of this embodiment identifies the shape of the reference field on the basis of the position information when the work vehicle 2 travels in the field in the first time period. Moreover, the work-related information management system 1 identifies the shape of the work field on the basis of the position information when the work vehicle 2 travels in the field in the second time period later than the first time period. Therefore, the work-related information management system 1 can properly manage the work-related information even when the work period of the work for which the position information used to identify the work field was acquired is different from the work period of the work for which the position information used to identify the reference field was acquired.

Unlike the embodiment described above, the work-related information management system 1 may use the position information of a reference work vehicle 7 (see the two-dot chain line in FIG. 1), which is different from the work vehicle 2, as the field position information of the reference field. In other words, the work-related information management system 1 may identify the shape of the reference field on the basis of the position information of the reference work vehicle 7, which is different from the work vehicle 2. For example, even when the position information contained in the data to be processed is that of a combine harvester, the work-related information management system 1 can use the position information of a work vehicle other than the combine harvester, such as a tractor or the like as the position information of the reference field.

In this case, the reference work vehicle 7 also has the satellite-signal receiving antenna 47 provided similarly to the work vehicle 2. And the control unit of the reference work vehicle 7 is configured to be able to receive positioning signals from the satellite-signal receiving antenna 47.

Even when the same field is to be worked, the traveling route may differ depending on a type of the work vehicle. For example, a traveling route on which a vehicle travels might be slightly different between a case where the work vehicle is a combine harvester and a case where the work vehicle is a tractor. Moreover, even if a user might think that a work vehicle of a different type travels on the same traveling route, an actual traveling trajectory can be different at each traveling in the field. If a plurality of works performed in the same field are treated as works in a different field due to differences in the traveling trajectory, management of the work-related information can become complicated similarly to the aforementioned case.

Therefore, in the work-related information management system 1 in this variation, the shape of the work field is identified on the basis of the position information of the work vehicle 2, and the shape of the reference field is identified on the basis of the position information of the reference work vehicle 7, which is different from the work vehicle. The work-related information management system 1 having a configuration as above can manage the work-related information even when the type of work vehicle 2 is different from the type of the reference work vehicle 7.

The present invention is not limited to the embodiment or variation described above, and can be implemented in other forms.

For example, in the embodiment or variations described above, the time-series data includes the crop type. However, the time-series data does not have to include the crop type. In this case, the work-related information management system 1 stores the crop type in the work-related information management table 67 on the basis of an input by the user (for example, the owner of the management field or the operator of the management server 4).

Moreover, the field position information of the management field does not have to be the position information of the work vehicle, and may be the position information set within the management server 4 on the basis of map information of the management field and the like.

Various other changes can be made within the scope described in the claims. Moreover, the configurations described in each of the embodiment and variation may be changed and/or combined as desired, to such an extent that they do not interfere with the functions.

Note that this application is a Japanese Patent Application No. 2019-194605 filed on October 25, 2019, on which priority is claimed, and the entire disclosure thereof is incorporated herein by reference.

## Claims

1. A work-related information management device comprising:
a position information acquisition unit that acquires position information of a work vehicle traveling while working in a field;
a field shape identification unit that identifies, on the basis of the position information of the work vehicle acquired by the position information acquisition unit, a shape of a work field in which the work vehicle traveled while working;
a degree-of-overlap determination unit that determines whether or not a degree of overlap between the work field and a reference field is larger than or equal to a predetermined degree by comparing the shape of the work field identified by the field shape identification unit with a shape of the reference field; and
an information management unit that, if the degree of overlap between the work field and the reference field is determined by the degree-of-overlap determination unit to be larger than or equal to the predetermined degree, manages work-related information related to the work in the work field in association with the reference field.

2. The work-related information management device according to claim 1, further comprising:
a work data acquisition unit that acquires work data of a work performed by the work vehicle; and
a map generation unit that generates a map showing the work data at each position in the work field on the basis of the position information of the work vehicle acquired by the position information acquisition unit and the work data of the work vehicle acquired by the work data acquisition unit, wherein
the information management unit manages the map generated by the map generation unit as the work-related information in association with the reference field when the degree of overlap between the work field and the reference field is determined by the degree-of-overlap determination unit to be larger than or equal to the predetermined degree.

3. The work-related information management device according to claim 2, wherein
the work vehicle is a combine harvester that harvests crops while traveling in the field; and
the map generated by the map generation unit is a yield map showing a distribution situation of a yield amount in the field.

4. The work-related information management device according to any one of claims 1 to 3, wherein
the field shape identification unit identifies the shape of the reference field on the basis of the position information of the work vehicle that traveled while working in a first time period and identifies the shape of the work field on the basis of the position information of the work vehicle that was acquired by the position information acquisition unit in a second time period later than the first time period.

5. The work-related information management device according to any one of claims 1 to 3, wherein
the field shape identification unit identifies the shape of the reference field on the basis of position information of a reference work vehicle that is different from the work vehicle.

6. A work-related information management system, comprising:
the work vehicle; and
the work-related information management device according to any one of claims 1 to 5.
